# EUROPEAN PATENT SPECIFICATION

(11) **EP 0 934 853 B1**
(45) Date of publication and mention of the grant of the patent: **22.09.2004**
(21) Application number: 96935488.5
(22) Date of filing: 29.10.1996
(51) Int. Cl.: B60R 21/26

(54) **GAS PRODUCER FOR AIR BAG**
GASERZEUGUNGSVORRICHTUNG FÜR EINEN AIRBAG
DISPOSITIF GAZOGENE POUR AIRBAG

(43) Date of publication of application: 11.08.1999
(73) Proprietor: Daicel Chemical Industries, Ltd., Sakai-shi, Osaka 590-8501 (JP)
(72) Inventor: TOKUDA, Masakazu, Himeji-shi, Hyogo 671-12 (JP); OGAWA, Akihisa, Himeji-shi, Hyogo 671-12 (JP)
(74) Representative: Grünecker, Kinkeldey, Stockmair & Schwanhäusser Anwaltssozietät
(86) International application number: PCT/JP1996/003167
(87) International publication number: WO 1998/018660

(56) References cited:
- EP-A- 0 665 138
- JP-A- 4 078 745
- JP-A- 7 112 652
- US-A- 5 114 179

## Description

### TECHNICAL FIELD TO WHICH THE INVENTION BELONGS

The present invention relates to an airbag gas generator for protecting an occupant from impacts and more specifically to a construction of an ignition means of the gas generator.

An airbag gas generator of the aforementioned type and presenting the features of the preamble of claim 1 is for instance known from document EP-A- 0 665 138.

### BRIEF DESCRIPTION OF THE DRAWINGS

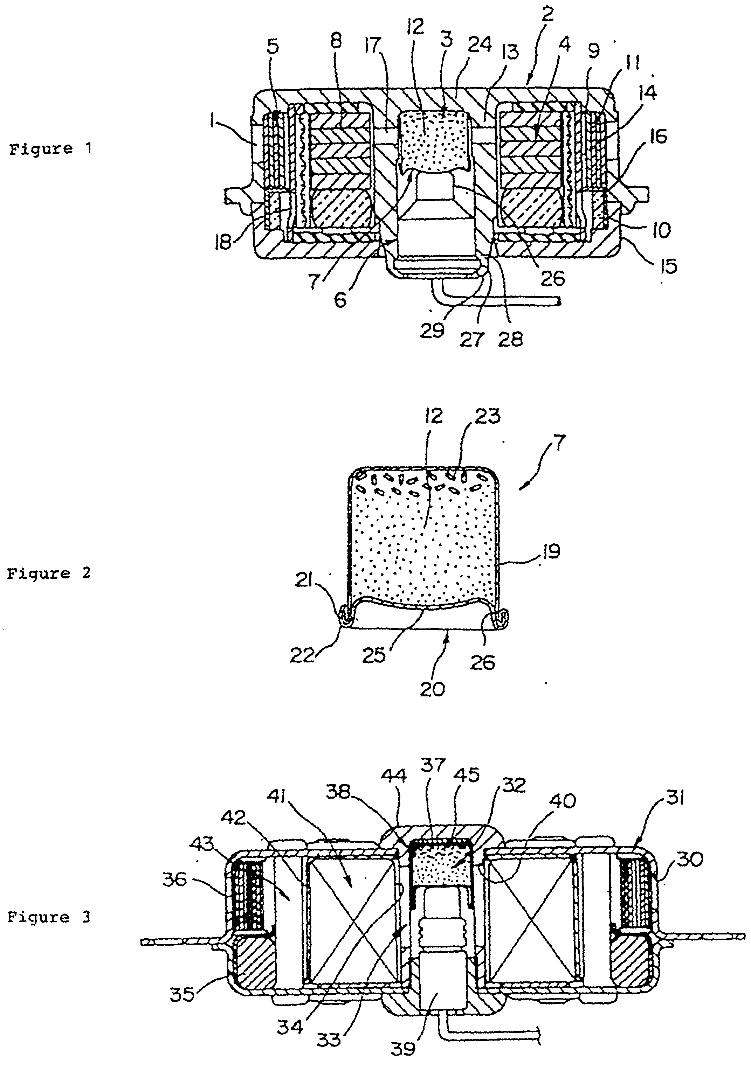

Figure 1 is a cross - sectional view of one embodiment of a gas generator. Figure 2 is a cross-sectional view of a transfer charge container in the gas generator. Figure 3 is a cross - sectional view of a conventional gas generator. In these figures, reference number 1 represents a discharge port (s), 2: a housing, 3: an ignition means accommodating chamber, 6: an igniter, 7: a transfer charge container, 8: a gas generating agent, 10: a coolant, 11: a filter, 12: a transfer charge, 19: a cup, 20: a cover, 24: a top wall portion and 25: a bottom.

### PRIOR ART

An example of a conventional airbag gas generator is illustrated in Figure 3. This gas generator includes: a housing 31 having gas discharge ports 30; an ignition means accommodating chamber 32 defined in a central part of the housing 31; an ignition means 33 installed in the ignition means accommodating chamber 32; a canister 34 containing a gas generating means, i.e. a gas generating agent that generates a gas when ignited by the ignition means; and a cooling and cleaning means, i.e., a coolant 35 and a filter 36, for cooling and cleaning the generated gas.

The ignition means 33 includes a transfer charge container 38 containing a transfer charge 37 and an igniter 39 that is activated by a signal to ignite the transfer charge 37.

When a sensor (not shown) detects an impact, a sensor signal is sent to the igniter 39, which is then activated to ignite the transfer charge 37. The transfer charge when ignited generates high-temperature and high-pressure flames, which pass through openings 40 into a combustion chamber 41, fracture the wall of the canister 34 and then ignite the gas generating agent. Then, the gas generating agent burns to generate a gas, which then enters a coolant filter chamber 43 from passing ports of a combustor cup 42 defining the combustion chamber. The gas is cooled and removed of combustion residues while it passes through the coolant 35. And while the gas passes through the filter 36, the remaining combustion residues are further removed, and the cooled and cleaned gas flows through the gas discharge ports 30 into an airbag (not shown). The inflow-gas inflates the airbag, forming a cushion between an occupant and a hard structure.

In the airbag gas generator used in a car, components are assembled. For example, the transfer charge container and the igniter are installed in the ignition means accommodating chamber so that they are in contact with each other.

A gap may occur between components due to tolerances of components themselves and assembly errors. There is a possibility that the transfer charge container, for example, may move in this gap or strike against the igniter and become destroyed.

To prevent the inner components from being dislocated or moving out of contact with associated components due to vibrations, the inner components need to be fixed. For this purpose, a resilient cushion is used.

In the above conventional gas generator, a cushion 45 is installed between the transfer charge container 38 and a hollow screw member 44 defining the ignition means accommodating chamber 32. This cushion 45 allows the transfer charge container 38 to be resiliently pressed against the igniter 39, preventing the movement of the transfer charge container 38 and also preventing the transfer charge container 38 from hitting against the igniter 39.

In the event of a fire of a vehicle incorporating the airbag gas generator, the gas generator is heated causing its interior to reach several hundred degrees. When at this elevated temperature the gas generating agent and transfer charge in the gas generator spontaneously burn, the housing may be destroyed and the damaged components may scatter.

To prevent this, an automatic ignition material (AIM) 23 is installed in the transfer charge container, as shown in Figure 2. The AIM has a low ignition point and thus can ignite before the gas generating agent and the transfer charge spontaneously burn. The ignition of this AIM ensures the combustion of the transfer charge and the gas generating agent, thus preventing their spontaneous combustion and therefore destruction of the housing. This AIM is arranged close to the outer wall of the housing to ensure that the heat of the outer side of the gas generator will be transferred well to the AIM.

The conventional gas generator requires a cushion between the transfer charge container and the hollow screw member, which in turn increases the number of components and assembly manhours.

The presence of a cushion between the transfer charge container and the hollow screw member blocks heat conduction, preventing the heat of the outer side of the gas generator from being transferred to the AIM well, which in turn may delay the ignition timing of the AIM.

It is therefore an object of the present invention to provide a novel airbag gas generator that solves the problems experienced with the above conventional airbag gas generator.

### DISCLOSURE OF THE INVENTION

An airbag gas generator according to this invention comprises: a housing having gas discharge ports; an ignition means accommodating chamber formed in a central part of the housing; an ignition means installed in the ignition means accommodating chamber; a gas generating means to be ignited by the ignition means and generate a gas; and a cooling and cleaning (purifying) means for cooling and cleaning (purifying) the gas generated by the gas generating means; wherein the ignition means includes a transfer charge container and an igniter, the transfer charge container having a cup part for accommodating the transfer charge and a cover part for hermetically closing the cup, the igniter to be activated by a signal and ignite the transfer charge; wherein the gas generated by the gas generating means in response to an impact is introduced into an airbag to protect an occupant against the impact; wherein the bottom of the cover part or the bottom of the cup part are outwardly curved to form an outwardly convex surface and the transfer charge container is resiliently held between a top wall portion of the ignition means accommodating chamber and the igniter.

In the transfer charge container used in this gas generator, the bottom of the cover or cup has a convex surface. This convex bottom can resiliently deflect upon receiving a pressing force. The deflection of the convex bottom applies a resilient force to the top wall portion of the ignition means accommodating chamber and to an igniter. In this way, the transfer charge container is resiliently held between the ceiling portion of the ignition means accommodating chamber and the igniter.

Because of the above construction, this invention can eliminate the cushion installed between the transfer charge container and the top wall portion of the ignition means accommodating chamber. This offers the advantages of reducing the number of components and assembly manhours.

Further, because no cushion is provided between the transfer charge container and the top wall portion, the heat conduction is improved, allowing heat on the outer side of the gas generator to be transferred efficiently to the AIM, which can then be ignited at an appropriate timing. This in turn secures safety.

### EMBODIMENT OF THE INVENTION

Now, one embodiment of the present invention will be described by referring the drawings.

Figure 1 is a cross-sectional view of a gas generator of this invention. This gas generator includes: a housing 2 having gas discharge ports 1; an ignition means accommodating chamber 3 defined in a central part of the housing 2; a combustion chamber 4 formed along the outer circumference of the ignition means accommodating chamber 3; a coolant filter chamber 5 formed along the outer circumference of the combustion chamber 4; an ignition means, i.e., an igniter 6 and a transfer charge container 7, arranged in the ignition means accommodating chamber 3; a canister 9 installed in the combustion chamber 4 and filled with a gas generating agent 8, the gas generating agent 8 to be ignited by the ignition means and generate a gas; and a coolant 10 and a filter 11, both installed in the coolant filter chamber 5 to cool and purify the combustion gas generated in the canister.

The ignition means accommodating chamber 3 is defined by a center cylindrical portion 13. The combustion chamber 4 is defined by the center cylindrical portion 13 and a combustion ring 14 enclosing the center cylindrical portion on its outer side. The coolant filter chamber 5 is defined by the combustion ring 14 and an outer wall portion 15 enclosing the combustion ring on its outer side. The coolant filter chamber 5 is divided into an upper tier chamber and a lower tier chamber by a retainer 16.

Between the ignition means accommodating chamber 3 and the combustion chamber 4 are provided passages 17 that transfer flames produced in the ignition means accommodating chamber 3 into the combustion chamber 4. Between the combustion chamber 4 and the coolant filter chamber 5 a plurality of gas passing ports 18 for a combustion gas generated in the combustion chamber 4 are formed in the circumferential direction in the combustion ring 14. Further, between the coolant filter chamber 5 and the airbag (not shown), a plurality of gas discharge ports 1 are formed in the circumferential direction.

The canister 9 is made of a thin aluminum container that forms an annular space and contains the gas generating agent 8 therein.

Figure 2 is a cross-sectional view of the transfer charge container 7 installed in the gas generator of this invention. This transfer charge container 7 is made by joining together a cup 19 and a cover 20, both formed of a thin aluminum plate.

The cup 19 is a hollow cylinder with one end closed, which has an outwardly directed flange 21 along the circumference of an open end. The cover 20 is shaped like a circular dish and has a generally spherical bottom 25 and a circumferential wall 26 with an outwardly extending flange 22.

After the cup 19 of the transfer charge container 7 is filled with an ignition material, it is hermetically sealed with the cover 20, with the cover flange 22 pressed against and holding the cup flange 21. The cup flange and the cover flange may also be joined together as by adhesive, heat seal and ultrasonic welding.

The transfer charge container 7 is filled with a transfer charge 12 and an AIM (automatic ignition material) 23. The AIM is disposed on the closed end side of the cup 19, i.e., on the top wall 24 side of the ignition means accommodating chamber.

The bottom 25 forms an outwardly convex surface when the cover 20 is mounted to the cup 19.

When the transfer charge container 7 and the igniter 6 are assembled into the gas generator, the transfer charge container 7 is first inserted into the ignition means accommodating chamber 3. With the closed end of the cup of the transfer charge container placed in contact with the top wall portion 24 of the ignition means accommodating chamber, the igniter 6 is inserted and the head portion 26' of the igniter is pressed against the cover bottom 25 of the transfer charge container until the flange 27 of the igniter 6 engages the stepped portion 28 of the center cylindrical portion 13. In this condition, the crimping portion 29 of the center cylindrical portion 13 is crimped.

The bottom 25 of the cover resiliently deflects as it receives a pressing force of the igniter head portion 26. The deflection of the bottom 25 exerts a resilient force to the top wall portion 24 of the ignition means accommodating chamber and also to the igniter 6. In this way, the transfer charge container 7 is resiliently held between the top wall portion of the ignition means accommodating chamber and the igniter.

In the gas generator of the above construction, when a sensor (not shown) detects an impact, its signal is sent to the igniter 6, which is then activated to ignite the transfer charge 12 generating high-temperature flames. The flames pass through the passages 17 into the combustion chamber 4, break the wall of the canister and then ignite the gas generating agent 8 contained in the canister. The burning gas generating agent 8 produces a gas, which passes through the gas passing ports 18 uniformly into the coolant filter chamber 5. The gas passes through the coolant 10, during which period the gas is cooled and the combustion residues are further removed. When the gas passes through the filter 11, the remaining combustion residues are removed. The combustion gas thus cooled and cleaned enters through the gas discharge ports 1 into the airbag (not shown), inflating the airbag to form a cushion between an occupant and a hard structure and thereby protect the occupant from impacts.

## Claims

1. Gas generator for an airbag comprising:
a housing (2) having gas discharge ports (1);
an ignition means accommodating chamber (3) formed in a central part of the housing (2);
an ignition means installed in the ignition means accommodating chamber (3);
a gas generating means (8) to be ignited by the ignition means and generate a gas; and
a cooling and cleaning means (10,11) for cooling and cleaning the gas generated by the gas generating means (8);
wherein the ignition means includes a transfer charge container (7) and an igniter (6), the transfer charge container (7) having a cup part (19) for accommodating the transfer charge (12) and a cover part (20) for hermetically closing the cup part (19), wherein the igniter (6) is to be activated by a signal and ignites the transfer charge (12); and
wherein the gas generated by the gas generating means (8) in response to an impact is introduced into an airbag to protect an occupant against the impact,
**characterised in that**
the bottom (25) of the cover part (20) or the bottom of the cup part (19) are outwardly curved to form an outwardly convex surfaceand the transfer charge container (7) is resiliently held Between a top wall portion (24) of the ignition means accommodating chamber (3) and the igniter (6).

## Patentansprüche

1. Gasgenerator für einen Airbag, enthaltend:
ein Gehäuse (2), das Gasabgabeöffnungen (1) aufweist;
eine in einem Mittelteil des Gehäuses (2) ausgebildete Kammer (3), die eine Zündeinrichtung aufnimmt;
eine Zündeinrichtung, die in der die Zündeinrichtung aufnehmenden Kammer (3) angeordnet ist;
eine Gaserzeugungseinrichtung (8), die durch die Zündeinrichtung zu zünden ist und ein Gas erzeugen soll;
eine Kühl- und Reinigungseinrichtung (10,11) zum Kühlen und Reinigen des von der Gaserzeugungseinrichtung (8) erzeugten Gases;
wobei die Zündeinrichtung einen Transferladungsbehälter (7) und einen Zünder (6) enthält, der Transferladungsbehälter (7) ein Becherteil (19) zur Aufnahme der Transferladung (12) und ein Deckelteil (20) zum hermetischen Verschließen des Becherteils (19) aufweist, und der Zünder (6) durch ein Signal zu aktivieren ist und die Transferladung (12) zündet; und
wobei das von der Gaserzeugungseinrichtung (8) als Folge eines Aufschlags erzeugte Gas in einen Airbag eingeleitet wird, um einen Insassen gegen einen Aufprall zu schützen,
**dadurch gekennzeichnet, dass**
der Boden (25) des Deckelteils (20) oder der Boden des Becherteils (19) nach außen gebogen sind, um eine nach außen konvexe Oberfläche zu bilden, und der Transferladungsbehälter (7) elastisch zwischen einem oberen Wandabschnitt (24) der die Zündeinrichtung aufnehmenden Kammer (3) und dem Zünder (6) gehalten ist.

## Revendications

1. Générateur de gaz pour un coussin de sécurité gonflable comprenant :
un boîtier (2) présentant des orifices d'évacuation de gaz (1) ;
une chambre (3) de réception de moyen d'allumage, formée dans une partie centrale du boîtier (2) ;
un moyen d'allumage installé dans la chambre (3) de réception de moyen d'allumage ;
un moyen de génération de gaz (8) à allumer par le moyen d'allumage et produisant un gaz ; et
un moyen de refroidissement et de purification (10, 11) destiné à refroidir et à purifier le gaz produit par le moyen de génération de gaz (8) ;
dans lequel le moyen d'allumage comporte un conteneur de charge de transfert (7) et un allumeur (6), le conteneur de charge de transfert (7) présentant une partie formant coupelle (19) destinée à recevoir la charge de transfert (12) et une partie formant couvercle (20) destinée à obturer hermétiquement la partie formant coupelle (19), dans lequel l'allumeur (6) doit être activé par un signal et allume la charge de transfert (12) ; et
dans lequel le gaz produit par le moyen de génération de gaz (8) en réponse à un choc est introduit dans un coussin de sécurité gonflable afin de protéger un occupant contre le choc,
**caractérisé en ce que**
la partie inférieure (25) de la partie formant couvercle (20) ou la partie inférieure de la partie formant coupelle (19) sont incurvées vers l'extérieur afin de former une surface convexe orientée vers l'extérieur et le conteneur de charge de transfert (7) est maintenu de manière élastique entre une partie de paroi supérieure (24) de la chambre de réception de moyen d'allumage (3) et l'allumeur (6).
